# EUROPÄISCHE PATENTANMELDUNG

(11) **EP 1 110 514 A1**
(43) Veröffentlichungstag der Anmeldung: **27.06.2001**
(21) Anmeldenummer: 00125593.4
(22) Anmeldetag: 22.11.2000
(51) Int. Cl.: A61C 8/00

(54) **Bausatz für einen Kunstzahn und Implantat**

(30) Priorität: 21.12.1999 DE 19961813
(71) Anmelder: Hofmann, Peter, 85221 Dachau (DE)
(72) Erfinder: Hofmann, Peter, 85221 Dachau (DE)
(74) Vertreter: Grünecker, Kinkeldey, Stockmair & Schwanhäusser Anwaltssozietät

(57) **Zusammenfassung**

Die Erfindung bezieht sich auf einen mehrteiligen Bausatz für einen Kunstzahn, mit einem in einen Kieferknochen (3) einsetzbaren Implantat, welches an seinem aus dem Kieferknochen herausragenden Ende einen durch einen umlaufenden Rand gebildeten Implantatabschluss aufweist. Auf dem Implantatabschluss ist ein Aufbaustumpf befestigbar, auf dem wiederum mittelbar oder unmittelbar eine Zahnkrone angebracht werden kann. Um die Degenerierung des Kieferknochens (3) im Bereich zwischen zwei benachbarten Zähnen zu verringern und eine girlandenförmige Kieferknochengrenze (4) beizubehalten, die das Wachstum des Zahnfleisches in die Zahnzwischenräume unterstützt, sieht die Erfindung vor, dass der umlaufende Rand des Implantatabschlusses dem Verlauf der Schmelz-Wurzel-Grenze (5) eines natürlichen Zahns (1) nachgebildet ist, in dem der Rand des Implantatabschlusses wellenartig verläuft, wobei im Bereich angrenzend an benachbarte Zähne jeweils einen Wellenberg und dazwischen jeweils ein Wellental liegt.

## Beschreibung

Die Erfindung bezieht sich auf einen Bausatz für einen Kunstzahn, mit einem in einen Kieferknochen einsetzbaren Implantat, welches an seinem aus dem Kieferknochen herausragenden Ende einen durch einen umlaufenden Rand gebildeten Implantatabschluss aufweist, auf welchem ein zur mittelbaren oder unmittelbaren Anbringung einer Zahnkrone aufsetzbarer Aufbaustumpf befestigbar ist.

Aus der Praxis sind solche mehrteiligen Bausätze bekannt. Sie umfassen in der Regel ein Implantat aus Titan, welches entweder in den Kieferknochen eingeschraubt oder eingeschlagen werden kann. Nach einer gewissen Einheilungsdauer wird auf das Implantat ein sog. Aufbaustumpf aufgesetzt, der üblicherweise mit einer zentralen Schraube mit dem Implantat verbunden wird. Auf diesen Aufbaustumpf kann dann, ggf. unter Zwischenschaltung einer Dämpfungslage oder auch unmittelbar eine Zahnkrone aufgesetzt werden. Solche mehrteiligen Bausätze haben sich in der Vergangenheit bewährt, da sie für den Kieferchirurgen einfach zu handhaben sind. Die bekannten Implantate weisen einen Implantatabschluss auf, der durch einen in einer Ebene liegenden Rand gebildet wird. Untersuchungen haben gezeigt, dass der Kieferknochen nach der Einheilphase des Implantates und nach einer gewissen Belastungszeit etwa 2 mm von dem Implantatabschluss, also von der Schnittstelle zwischen Implantat und Aufbaustumpf, entfernt liegt. Dabei spielt es offensichtlich keine Rolle, ob das Implantat bündig mit dem Knochen eingesetzt wurde, oder dieser von Anfang an 2 mm überragt. Im ersten Fall ist nämlich zu beobachten, dass sich der Kieferknochen während der Einheilphase zurückbildet. Bei den bekannten Implantaten hat man, insbesondere, wenn sie zum Ersatz der Frontzähne eingesetzt werden, beobachten können, dass das Zahnfleisch zwischen zwei benachbarten Zähnen und insbesondere dann, wenn mehrere Implantate nebeneinander gesetzt werden, nicht in die Zahnzwischenräume hineinwächst.

Aufgabe der vorliegenden Erfindung ist es daher, unter Beibehaltung der Vorteile eines mehrteiligen Bausatzes der eingangs genannten Art diesen so zu verbessern, dass das Nachwachsen des Zahnfleisches in den Zahnzwischenräumen verbessert wird.

Diese Aufgabe wird erfindungsgemäß dadurch gelöst, dass der umlaufende Rand des Implantatabschlusses dem Verlauf der Schmelz-Wurzel-Grenze eines natürlichen Zahns nachgebildet ist, indem der Rand des Implantatabschlusses wellenartig verläuft, wobei im Bereich angrenzend an benachbarte Zähne jeweils ein Wellenberg und dazwischen jeweils ein Wellental liegt.

Die Erfindung baut auf der Erkenntnis auf, dass bei einem natürlichen Gebiss die Schmelz-Wurzel-Grenze mehrere benachbarter Zähne girlandenförmig verläuft. Der Knochen verläuft ungefähr im Abstand von 2 mm parallel zu der Schmelz-Wurzel-Grenze. Das dazwischen liegende Band wird auch als biologische Breite bezeichnet und hat denselben dreidimensionalen Verlauf wie die Schmelz-Wurzel-Grenze. Das Zahnfleisch verläuft etwa 3mm oberhalb des Knochens, ebenfalls in etwa parallel zu der Schmelz-Wurzel-Grenze. Dieser Verlauf der bei einem natürlichen Implantat bestehenden biologischen Breite wird durch die wellenförmige Ausbildung des Randes des Implantatabschlusses nachgebildet. Je nachdem, ob der Implantatabschluss aus dem Kieferknochen herausragt oder bündig abschließt, bleibt der Kieferknochen unverändert oder bildet sich zurück. Da nunmehr aber der Rand des Implantatabschlusses im wesentlichen parallel zu der vorherigen Knochengrenze verläuft, bilden sich zwischen den Implantaten Papillen bzw. bleiben erhalten. Der zwischen die Zahnzwischenräume bzw. Implantatzwischenräume hineinragende Kieferknochen stellt eine ausreichende Basis für das in die Zahnzwischenräume hineinwachsende Zahnfleisch dar. Es wird somit ein weitaus ansprechenderes ästhetisches Ergebnis gegenüber herkömmlichen Implantaten erreicht.

Der zum Bausatz gehörige Aufbaustumpf weist an seiner dem Implantatabschluss zugewandten Seite zweckmäßigerweise einen Rand auf, der komplementär zum Rand des Implantatabschlusses verläuft. Auf diese Weise lässt sich der Aufbaustumpf einfach auf dem Implantat aufsetzen und gegenüber diesem abdichten.

In einer bevorzugten Ausführungsform weist das aus dem Kieferknochen herausragende Ende des Implantats in einer Ansicht auf eine durch die benachbarten Zähne aufgespannten Ebene eine konkave Ausnehmung auf, während die zugewandte Seite des Aufbaustumpfs, in gleicher Ansicht, eine konvexe Auswirkung aufweist. Die konkave Ausnehmung des Implantates und die konvexe Auswölbung des Aufbaustumpfs sind aufeinander angepasst. Diese Ausgestaltung des Implantates ermöglicht eine einfache Herstellung des wellenförmig verlaufenden Randes des Implantatabschlusses durch Ausfräsen einer quer zur Achsrichtung des Implantats verlaufenden Rinne.

In diesem Zusammenhang ist es günstig, wenn das Implantat als gewindeloser Einschlagpfosten ausgebildet ist. Das Implantat kann so bereits vor dem Einschlagen in den Kieferknochen entsprechend ausgerichtet werden, wobei lediglich darauf zu achten ist, dass die Längserstreckung der rinnenförmigen Ausnehmung etwa senkrecht zur Zahnfront verläuft. In diesem Zusammenhang ist es ferner günstig, wenn der Einschlagpfosten auf Höhe des Austritts aus dem Kieferknochen eine von der Kreisform abweichende Querschnittsform aufweist. Ist der Einschlagpfosten einmal ausgerichtet, lässt sich somit verhindern, dass der Pfosten während des Einschlagens seine Orientierung ändert.

Besonders vorteilhaft ist in diesem Zusammenhang, wenn der Pfosten eine der natürlichen Zahnform des zu ersetzenden Zahnes nachempfundene Querschnittsform mit abgerundeten Ecken aufweist. Beispielsweise ist die Form des oberen, mittleren Schneidezahns im wesentlichen dreiecksförmig. Neben den zuvor erwähnten Vorteilen wird hierdurch auch erreicht, dass sich der Knochen entweder gar nicht zurückbildet, oder zumindest unter Beibehaltung seines ursprünglichen Verlaufs, so dass das Zahnfleisch auch außerhalb der Zahnzwischenräume eine ausreichende Unterstützung durch den Knochen erhält.

Ferner ist es günstig, wenn der Pfosten sich zum aus dem Kieferknochen herausragenden Ende im wesentlichen konisch erweitert. Unter konisch ist hier nicht zu verstehen, dass der Querschnitt in diesem Bereich kreisrund sein soll; im Gegenteil ist ein der natürlichen Zahnform nachgebildeter, im wesentlicher dreiecksförmiger Querschnitt angestrebt. Die konische Erweiterung dient vielmehr zur Verbreiterung der für den Aufbaustumpf vorhandenen Basis.

Im folgenden wird die Erfindung anhand einer Zeichnung beispielhaft erläutert.

Es zeigen:
- Fig. 1: eine Ansicht auf eine Schneidezahnfront mit natürlich in die Zahnzwischenräume eingewachsenen Zahnfleisch,
- Fig. 2: dieselbe Schneidezahnfront ohne Darstellung des Zahnfleischs,
- Fig. 3: eine Schnittansicht durch die Schneidezahnfront in Fig. 1 entlang der Linie III-III,
- Fig. 4: in gleicher Ansicht wie Fig. 3 einen aus einem erfindungsgemäßen Bausatz aufgebauten Kunstzahn;
- Fig. 5: einen erfindungsgemäßen Bausatz in einer perspektivischen Explosionsdarstellung,
- Fig. 6: das Implantat aus Fig. 5 mit aufgesetztem Aufbaustumpf in einer Ansicht entsprechend des Pfeiles VI in Fig. 4, und
- Fig. 7: eine Ansicht auf das Implantat gemäß Fig. 6 in Richtung des Pfeiles VII und
- Fig. 8: einen Querschnitt durch das Implantat in Fig. 6 entsprechend der Linie VIII-VIII;
- Fig. 9: ein neben einem natürlichen Zahn eingesetztes Implantat unmittelbar nach dem Einsetzen und
- Fig. 10: das Implantat aus Fig. 9 nach der Einheil- und Belastungsphase.

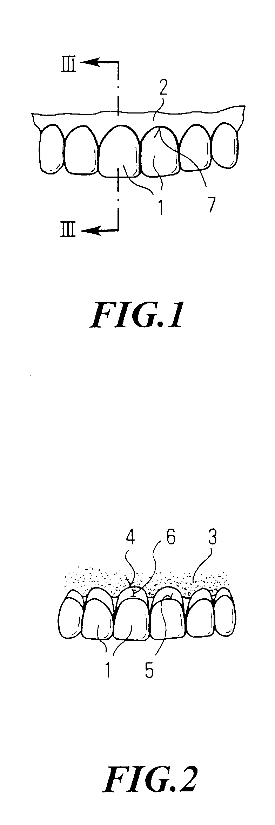

Fig. 1 zeigt die Schneidezahnfront des Oberkiefers eines gesunden Menschen. Es ist zu erkennen, dass zwischen zwei benachbarten Zähnen 1 das Zahnfleisch 2 idealerweise in die Zahnzwischenräume hineinwächst. Ein solches Erscheinungsbild wird als ästhetisch ansprechend empfunden.

Fig. 2 zeigt dieselbe Ansicht auf eine Schneidezahnfront wie Fig. 1, allerdings ohne Zahnfleisch. Es ist zu erkennen, dass der Kieferknochen im Bereich der natürlichen Zähne einen girlandenförmigen Verlauf 4 bildet. Mit anderen Worten ragt der Kieferknochen zwischen zwei benachbarten Zähnen ein Stück weit in die Zahnzwischenräume hinein. Dieser girlandenförmigen Grenzlinie 4 folgt auch die Schmelz-Wurzel-Grenze 5 eines Zahnes 1. Der Abstand zwischen der girlandenförmigen Kieferknochengrenze 4 und der ebenfalls girlandenförmigen Schmelz-Wurzel-Grenze 5 wird auch als biologische Breite 6 bezeichnet. In der Regel beträgt der Abstand zwischen der Kieferknochengrenze 4 und der Schmelz-Wurzel-Grenze 5 etwa 2mm.

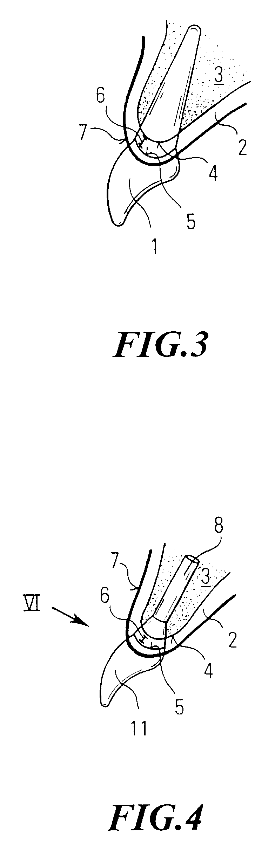

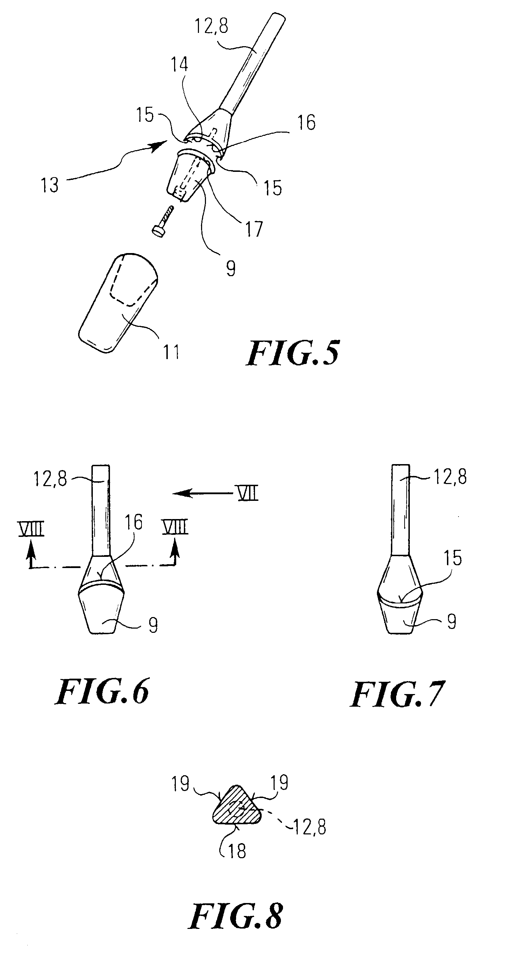

Wie besonders gut aus Fig. 3 zu erkennen ist, liegt normalerweise die Zahnfleischgrenze 7 etwa 1mm oberhalb der Schmelz-Wurzel-Grenze und deckt somit den nicht mit Schmelz belegten Zahnhals, bzw. die Wurzel vollständig ab und überlappt mit dem Zahnschmelz. Der erfindungsgemäße Bausatz, wie er in den Figuren 5 bis 8 dargestellt ist, umfasst ein Implantat 8, einen Aufbaustumpf 9, der beispielsweise mit einer Schraube 10 am Implantat 8 festgeschraubt werden kann, und einer hier lediglich angedeuteten Zahnkrone 11, die an den Aufbaustumpf 9 angepasst ist.

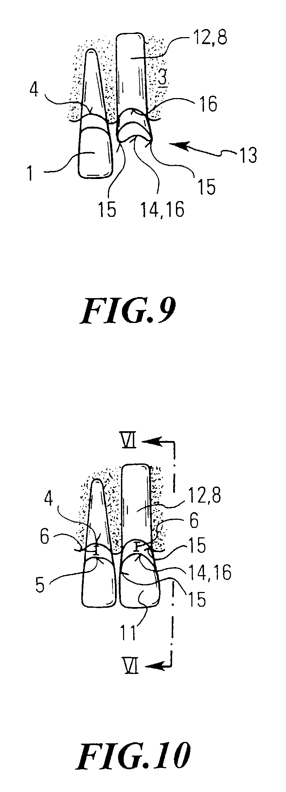

Das Implantat 8 besteht bei dem hier dargestellten Ausführungsbeispiel aus einem Pfosten 12, der sich etwa im letzten Fünftel seiner Länge zum Implantatabschluss 13 hin konusförmig erweitert. Der Implantatabschluss 13 selbst wird durch einen wellenförmig umlaufenden Rand 14 gebildet. Wie besonders gut aus den Figuren 5 und 9 ersichtlich ist, weist der wellenförmig verlaufende Rand 14 zu den seitlich benachbarten Zähnen hin Wellenberge 15 und in den dazwischen liegenden Bereichen Wellentäler 16 auf. In der Vorderansicht gemäß Fig. 6 und der Seitenansicht gemäß Fig. 7 sind die Wellenberge und Wellentäler des Randes 14 deutlich zu erkennen. Der Aufbaustumpf 9 umfasst einen Rand 17, der komplementär zu dem Rand 14 des Implantatabschlusses 13 des Implantats 8 verläuft.

Der Querschnitt des Pfostens 12 ist der Form der Wurzel eines natürlichen Zahnes nachempfunden. D.h. sein Querschnitt ist nicht kreisrund sondern zumindest im Bereich des sich kegelstumpfförmig erweiternden Abschnitts im wesentlichen dreieckförmig, wie aus der Fig. 8 zu erkennen ist. Dabei ist eine Dreieckseite 18 parallel zur Zahnfront ausgerichtet, während die beiden sich anschließenden Dreiecksseiten 19 konvergierend zur Zahnrückseite verlaufen.

Im folgenden wird die Wirkungsweise des erfindungsgemäßen Bausatzes näher erläutert.

Wie bei üblichen Zahnimplantaten auch, wird zunächst der Kieferknochen aufgebohrt, bzw. die vorgebohrte Öffnung mit einem Meißel im Durchmesser vergrößert. Anschließend wird der Implantatpfosten 12 eingeschlagen. Unmittelbar nach der Implantation des Pfostens 12 sieht die Situation im Oberkiefer so, wie in Fig. 9 dargestellt, aus. Dadurch, dass der Implantatabschluss einen wellenförmigen Rand aufweist, der in der Frontsicht der girlandenförmigen Grenze 4 des Kieferknochens angepasst ist und in etwa 2mm mit Abstand von der girlandenförmigen Kieferknochengrenze 4 verläuft, wird verhindert, dass der Kieferknochen sich zurückbildet. Wird das Implantat tiefer eingesetzt, bildet sich zwar der Kieferknochen geringförmig zurück; die Kieferknochengrenze 4 bleibt jedoch girlandenförmig, so dass zwischen zwei benachbarten Zähnen bzw. Implantaten Kieferknochen verbleiben.

Anhand der Fig. 10 ist zu erkennen, dass nach der Einheil- und Belastungsphase der Kieferknochen 3 sich kaum zurückgebildet hat, vor allen Dingen aber, dass die Kieferknochengrenze 4 ihre girlandenförmige Gestalt beibehalten hat. Aus der Ansicht gemäß Fig. 4 ist zudem deutlich zu ersehen, dass die Zahnfleischgrenze 7 zwischen den benachbarten Zähnen soweit in den Zahnzwischenraum hineinragt, dass der Implantatabschluss abgedeckt ist. Letzteres ist vor allen Dingen darauf zurückzuführen, dass der Kieferknochen ebenfalls bis in den Zahnzwischenraum hineinragt und seine girlandenförmige Struktur beibehält.

Insgesamt lässt sich durch die erfindungsgemäße Ausbildung des Implantates bzw. des Bausatzes auch nach der Restauration ein ästhetisches Erscheinungsbild erreichen, dass dem in Fig. 1 nahe kommt.

## Patentansprüche

1. Bausatz für einen Kunstzahn mit einem in einen Kieferknochen (3) einsetzbaren Implantat (8), welches an seinen aus dem Kieferknochen ragenden Ende einen durch einen umlaufenden Rand (14) gebildeten Implantatabschluss (13) aufweist, auf welchem zur mittelbaren und unmittelbaren Anbringung einer Zahnkrone (11) ein Aufbaustumpf (9) befestigbar ist, **dadurch gekennzeichnet,** dass der umlaufende Rand (14) des Implantatabschlusses (13) dem Verlauf der Schmelz-Wurzel-Grenze (5) eines natürlichen Zahnes nachgebildet ist, indem der Rand (14) des Implantatabschlusses (13) wellenartig verläuft, wobei im Bereich angrenzend an benachbarte Zähne (1) jeweils ein Wellenberg (15) und dazwischen jeweils ein Wellental (16) liegt.

2. Bausatz nach Anspruch 1, **dadurch gekennzeichnet,** dass der Aufbaustumpf (9) an seiner dem Implantatabschluss (3) zugewandten Seite des Implantats einen Rand (17) aufweist, der komplementär zum Rand (14) des Implantatabschlusses (13) verläuft.

3. Bausatz nach Anspruch 1 oder 2, **dadurch gekennzeichnet,** dass das aus dem Kieferknochen (3) herausragende Ende des Implantats (8) in einer Ansicht auf eine durch die benachbarten Zähne (1) aufgespannte Ebene eine konkave, durch die Wellentäler (16) bestimmte Ausnehmung aufweist, während die zugewandte Seite des Aufbaustumpfs (9) in gleicher Ansicht eine konvexe Auswölbung aufweist.

4. Implantat nach einem der Ansprüche 1 bis 3, **dadurch gekennzeichnet,** dass das Implantat (8) als gewindeloser Einschlagpfosten (12) ausgebildet ist.

5. Implantat nach Anspruch 4, **dadurch gekennzeichnet,** dass der Einschlagpfosten (12) im Bereich der Kieferknochengrenze (4) einen von der Kreisform abweichenden Querschnitt aufweist.

6. Implantat nach Anspruch 7, **dadurch gekennzeichnet,** dass der Einschlagpfosten (12) eine der natürlichen Zahnform des zu ersetzenden Zahnes nachempfundene Querschnittsform mit abgerundeten Ecken aufweist.
